# DEMANDE DE BREVET EUROPEEN

(11) **EP 1 550 954 A1**
(43) Date de publication de la demande: **06.07.2005**
(21) Numéro de dépôt: 04030380.2
(22) Date de dépôt: 22.12.2004
(51) Int. Cl.: G06F 17/24

(54) **Transcription de traces**

(30) Priorité: 29.12.2003 FR 0315511
(71) Demandeur: FRANCE TELECOM, 75015 Paris (FR)
(72) Inventeur: Lauvergne, Muriel, 22560 Trebeurden (FR); Panaget, Franck, 22560 Trebeurden (FR); Le Bigot, Ludovic, 22700 Perros Guirec (FR)
(74) Mandataire: Cabinet Martinet & Lapoux

(57) **Abrégé**

Des premières traces successives (TR) incluses dans une base de données d'un serveur sont transcrites en des deuxièmes traces depuis un terminal incluant une base de données. Le terminal sélectionne (E4) des paramètres de transcription (PAT) en fonction de caractéristiques de premières traces sélectionnées dans la base de données (BDT) du serveur. Puis au moins deux étapes sont sélectionnées parmi des étapes de transcription en fonction des paramètres de transcription sélectionnés et sont enchaînées automatiquement par le terminal ce qui augmente la vitesse et la qualité de la transcription. L'une des deux étapes sélectionnées est une détermination (E6) d'une première trace courante à transcrire parmi les premières traces sélectionnées en fonction des paramètres de transcription.

## Description

La présente invention concerne un procédé et un système pour transcrire semi-automatiquement des traces. Plus précisément l'invention se rapporte au traitement manuel d'un signal audio assisté par ordinateur afin par exemple d'indexer le signal audio et l'associer à une ou plusieurs classes, ou de préparer celui-ci à un traitement automatique tel qu'une reconnaissance vocale.

Actuellement des logiciels d'aide à la transcription et à l'annotation de signaux vocaux assistent partiellement un usager en lui proposant à travers une interface graphique de segmenter les signaux vocaux, de transcrire des paroles contenues dans les signaux vocaux, de marquer des tours de parole, c'est-à-dire des changements de locuteur, et d'annoter les signaux vocaux afin de les segmenter thématiquement et acoustiquement.
Deux logiciels connus sous les appellations "Transcriber" et "Praat" présentent de telles fonctionnalités.
Ces logiciels sont limités à des fonctionnalités sélectionnées au coup par coup par l'usager, mais ce qui offre une grande souplesse d'action à l'usager. Cependant ces logiciels restent inadaptés aux conditions de travail réelles d'un transcripteur et génèrent une perte de temps, parce que la transcription ou l'annotation est souvent un enchaînement de tâches répétitives.

L'objectif de l'invention est d'améliorer une transcription de traces en automatisant des étapes de la transcription afin d'augmenter la vitesse et la qualité de la transcription.

L'invention concerne ainsi un procédé pour transcrire des premières traces successives incluses dans une base de données d'un serveur en des deuxièmes traces dans un terminal incluant une base de données, comprenant une sélection de premières traces dans la base de données du serveur depuis le terminal et des étapes de transcription de premières traces.
Pour atteindre l'objectif ci-dessus, le procédé est caractérisé en ce qu'il comprend:
une sélection de paramètres de transcription en fonction de caractéristiques des premières traces sélectionnées dans le terminal de transcription, et
un enchaînement automatique d'au moins deux étapes sélectionnées parmi les étapes de transcription en fonction des paramètres de transcription sélectionnés.

De préférence, la première desdites au moins deux étapes sélectionnées est une détermination d'une première trace courante à transcrire parmi les premières traces sélectionnées en fonction des paramètres de transcription.
Comme on le verra ci-après, les étapes sélectionnées autres que la première étape sélectionnée peuvent être une mémorisation des paramètres de transcription sélectionnés dans la base de données du terminal, une transcription de la première trace courante en une deuxième trace courante, et une mémorisation de la deuxième trace courante afin que, lorsque la transcription de premières traces continue ultérieurement, la première trace succédant à la première trace qui vient d'être transcrite dans le signal audio soit considérée comme la première trace courante suivante à transcrire selon les paramètres de transcription mémorisés.
L'une des étapes sélectionnées autres que la première étape sélectionnée peut être
une exécution automatique d'un fichier audio associé à la première trace courante, ou
un chargement de lexique de mots et/ou de liste d'évènements acoustiques et/ou de liste de symboles incluses dans la base de données et/ou de liste de symboles contenue dans la base de données dans le terminal en fonction des paramètres de transcription.
L'une des étapes sélectionnées peut être encore
une complétion proposant des choix de mots et/ou d'évènements acoustiques et/ou de symboles inclus dans la base de données du terminal pour compléter une deuxième trace courante dès une saisie d'un premier caractère de celle-ci, ou
une validation de la transcription d'une première trace courante en une deuxième trace courante en appliquant des règles de transcription.
Selon une autre réalisation, la transcription d'une première trace en une deuxième trace peut consister en une annotation à associer à la première trace ou à modifier une annotation associée à la première trace.

L'invention concerne également un système pour transcrire automatiquement des premières traces successives incluses dans une base de données d'un serveur depuis un terminal de transcription incluant une base de données et un moyen pour sélectionner des premières traces dans la base de données du serveur depuis le terminal de transcription et des étapes de transcription de traces. Le système est caractérisé en ce que le terminal comprend:
un moyen pour sélectionner des paramètres de transcription en fonction de caractéristiques des premières traces sélectionnées, et
un moyen pour enchaîner automatiquement au moins deux étapes sélectionnées parmi les étapes de transcription en fonction des paramètres de transcription sélectionnés.

L'invention a trait aussi à un terminal pour transcrire automatiquement des premières traces successives incluses dans une base de données d'un serveur comprenant une base de données et un moyen pour sélectionner des premières traces dans la base de données du serveur et des étapes de transcription de traces. Le terminal est caractérisé en ce que le terminal comprend:
un moyen pour sélectionner des paramètres de transcription en fonction de caractéristiques des premières traces sélectionnées, et
un moyen pour enchaîner automatiquement au moins deux étapes sélectionnées parmi les étapes de transcription en fonction des paramètres de transcription sélectionnés.

Enfin, l'invention se rapporte également à un programme d'ordinateur sur un support d'informations pour transcrire des premières traces successives incluses dans une base de données d'un serveur en des deuxièmes traces et apte à être mis en oeuvre dans un terminal de transcription, ledit terminal comprenant des instructions de programme qui, lorsque le programme est chargé et exécuté sur ledit terminal, réalisent les étapes selon le procédé de l'invention.

D'autres caractéristiques et avantages de la présente invention apparaîtront plus clairement à la lecture de la description suivante de plusieurs réalisations préférées de l'invention, à titre d'exemples non limitatifs, en référence aux dessins annexés correspondants dans lesquels :
- la figure 1 est un bloc-diagramme schématique d'un système de transcription selon une réalisation de l'invention ;
- la figure 2 est un algorithme schématique du procédé de transcription selon une première réalisation de l'invention ; et
- la figure 3 est un algorithme schématique du procédé de transcription selon une deuxième réalisation de l'invention.

De manière générale, l'invention décrite ci-après est relative à une transcription de premières traces en des deuxièmes traces.
Une première trace peut être une trace audio constituée par un segment audio d'un signal audio à transcrire en une trace transcrite, en tant que deuxième trace, qui est composée d'un message textuel résultant d'une transcription manuelle de la trace audio. Une trace audio comporte un ou plusieurs mots ou groupes successifs séparés par des espaces incluant des événements acoustiques définis plus loin. Dans une conversation de deux locuteurs ou réunion de plusieurs locuteurs, une trace audio ne provient que d'un locuteur. Une première trace peut être une trace transcrite telle que définie ci-dessus, composée d'un message textuel résultant par exemple d'un texte d'un message électronique ou d'une reconnaissance vocale d'une trace audio dans le signal audio, et est à transcrire en une trace transcrite modifiée, en tant que deuxième trace, qui résulte d'une modification du message textuel constituant la première trace. Une première trace peut être encore une trace transcrite ou transcrite modifiée à transcrire en une trace transcrite annotée ou transcrite modifiée annotée, en tant que deuxième trace, qui est composée de la première trace et d'une annotation qui complète le sens de la première trace par une observation difficilement classifiable sur la première trace.

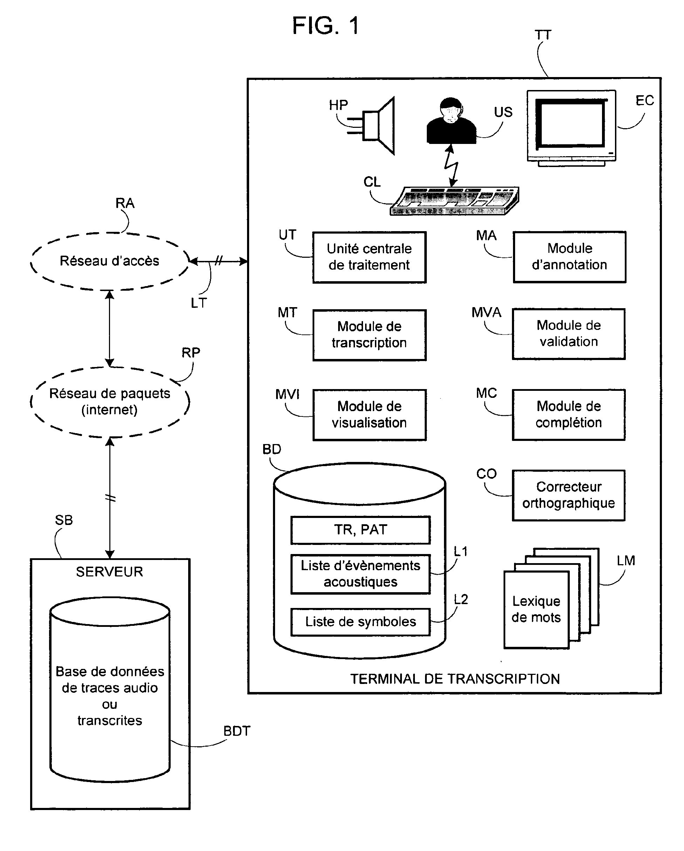

Le système de transcription mettant en oeuvre le procédé de transcription selon une réalisation préférée de l'invention comprend principalement des composants logiciels et un serveur de gestion de base de données de premières traces SB. Les composants logiciels sont relatifs à des fonctionnalités de l'invention et essentiellement installés dans un terminal de transcription TT, tel qu'un ordinateur personnel, pouvant communiqué avec le serveur de gestion de base de données, comme illustré à la figure 1.

Le terminal de transcription TT est connecté à un réseau d'accès RA à travers une liaison de télécommunications LT. La liaison LT et le réseau RA peuvent être classiquement une ligne téléphonique et le réseau téléphonique commuté RTC lui-même connecté à un réseau de transmission de paquets à haut débit RP de type internet. Selon d'autres variantes, la liaison de télécommunications LT est une ligne xDSL (Digital Subscriber Line) ou une ligne RNIS (Réseau Numérique à Intégration de Services) reliée au réseau d'accès correspondant. Le terminal de transcription TT est par exemple un ordinateur personnel relié directement par modem à la liaison LT. Le terminal de transcription et les réseaux d'accès ne sont pas limités aux exemples ci-dessus et peuvent être constitués par d'autres terminaux et réseaux d'accès connus.

Le serveur de base de données SB est relié au réseau de transmission de paquets RP. Le serveur de base de données et le terminal de transcription TT communique à travers les réseaux RA et RP.

Dans une variante, le serveur de base de données SB est à proximité du terminal de transcription TT et la liaison LT est par exemple une liaison câblée classique ou une liaison de faible portée.

Le serveur de base de données SB gère une base de données de traces audio et/ou transcrites BDT. Initialement, soit des traces audio sont à transcrire manuellement en des traces transcrites, soit des traces déjà transcrites par un système de reconnaissance vocale sont à transcrire en des traces transcrites modifiées.
Par exemple dans le cadre d'un service vocal, une conversation est antérieurement enregistrée lors d'une interaction vocale entre un serveur vocal et un usager du service vocal. Un exemple de plusieurs enregistrements contenu dans la base de données de traces BDT est le suivant:
- serveur vocal : "Bonjour, vous êtes sur un serveur vocal de consultation de restaurant. Que désirez vous ?" (format texte) ;
- résultat du traitement de la réponse de l'usager du service vocal par un système de reconnaissance vocale : "cherche un restau" (format texte) ;
- serveur vocal : "Vous recherchez un restaurant. Précisez la spécialité, le lieu ou le prix" (format texte);
- résultat du traitement de la réponse de l'usager du service vocal par un système de reconnaissance vocale : "asiatique" (format texte).
   Une trace est ici une trace transcrite puisqu'elle est déjà en format texte et comprend par exemple une question du serveur vocal, ou une réponse de l'usager du service vocal. Lorsque la première trace est une trace audio ou bien une trace transcrite, l'enregistrement de la trace audio correspondant constitue un fichier audio associé à la première trace dans la base de donnée BDT.
   Chaque trace transcrite peut être incorporée dans un groupe de traces transcrites ayant des caractéristiques communes. Une trace transcrite est caractérisée par et associée à un identificateur de trace, une désignation d'émetteur de trace, un nom de trace et éventuellement un fichier audio de trace et une annotation de trace. En général, des caractéristiques d'une première trace, telles que la désignation d'émetteur de trace et éventuellement le fichier audio de trace et une annotation de trace sont attribuées à la deuxième trace qui résulte de la transcription de la première trace, moyennant des corrections ultérieures des caractéristiques.
   L'émetteur de trace indique la provenance de la trace transcrite. En référence à l'exemple ci-dessus, un émetteur est par exemple un serveur vocal ou un système de reconnaissance vocale. La trace transcrite contient le texte correspondant à la trace audio d'origine ainsi que bien souvent des informations diverses caractérisant la trace.
   Dans une variante, la base de données de traces BDT est installée directement dans le terminal de transcription TT.

Le terminal de transcription TT relatif à un usager US comprend une unité centrale de traitement UT incluant une interface de communication avec le réseau d'accès RA, un module de transcription de trace MT, un module d'annotation de trace MA, un module de validation MVA, un module de visualisation de trace MVI, un module de complétion MC, des lexiques de mots LM, une base de données BD incluant au moins une liste d'évènements acoustiques L1 et une liste de symboles L2, et une interface d'usager comportant un transducteur électro-acoustique telle qu'un haut-parleur HP associé à une carte audio ou tout autre moyen de restitution d'un signal audio, un clavier CL et un écran de visualisation EC.

Dans une variante, la base de données BD et/ou les lexiques de mots LM sont installés dans le serveur de base de données SB et le terminal de transcription TT y accède à travers les réseaux RA et RP.

Un événement acoustique inclus entre des mots ou groupes de mots dans une trace est un son spécifique, par exemple un claquement de porte, un aboiement, un éternuement, un bruit de bouche, une sonnerie, etc. Un événement acoustique est défini par un type, un nom unique, un nom d'affichage et une balise de début, et éventuellement une balise de fin, une expression régulière et une description. Un événement acoustique est soit de type long, soit de type court. Un événement acoustique de type long comprend une balise de fin et une expression régulière, contrairement à un événement acoustique de type court. Un événement de type court est associé à un événement acoustique ponctuel tel qu'un éternuement ; par exemple en référence à la conversation ci-dessus : "[éternuement] asiatique". Un événement de type long est associé à un événement pendant lequel d'autres sons peuvent se produire tel que l'événement acoustique musique ; par exemple en référence à la conversation ci-dessus : "[musique] Vous rechercher un restaurant [-musique]".
Certains événements acoustiques peuvent à la fois être représentés seulement par une balise de début ou par un couple de balises de début et de fin.
Les balises sont utilisées afin de faciliter la transposition au format XML (extensible Markup Language) des fichiers contenant des traces transcrites, puisque le langage XML repose sur une syntaxe à base de balises.
Un symbole est une abréviation d'un mot ou d'une expression et est défini par un identificateur de symbole à partir duquel une balise est formée. Un triplet (symbole, mot ou expression, identificateur) est par exemple : (cda, Côtes-d'Armor, @cda) ; (RP, Région Parisienne, @RP) ; (ft, France-Télécom, @ft).

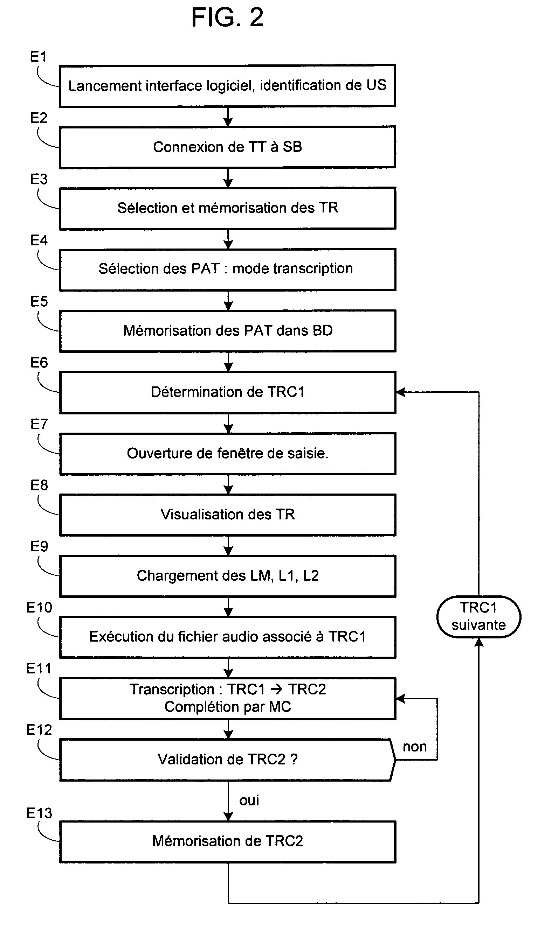

Le procédé de transcription semi-automatique selon la première réalisation comprend principalement des étapes E1 à E13 montrées à la figure 2.
Dans cette première réalisation, l'objectif de l'usager US du terminal de transcription TT est de transcrire une première trace courante TRC1 en une deuxième trace courante TRC2 par exemple dans le contexte de la conversation entre le serveur vocal et l'usager du service vocal. Si la première trace courante n'a jamais été transcrite et est donc une trace audio, la transcription de la première trace courante par l'usager consiste à transcrire le fichier audio associé à la première trace courante en une trace transcrite en tant que deuxième trace courante. Si la première trace courante est initialement une trace transcrite issue d'une reconnaissance vocale, la transcription de la première trace courante par l'usager consiste en une modification de la première trace transcrite en une trace transcrite modifiée en tant que deuxième trace courante.
A l'étape E1, le terminal de transcription TT à la demande de l'usager US lance une interface logicielle, invitant l'usager à s'identifier.
Une fois l'usager identifié, une session de l'usager débute et le terminal de transcription TT est connecté automatiquement au serveur de gestion SB à l'étape E2.
L'usager US sélectionne dans la base de données de traces BDT des premières traces TR à traiter. Ces premières traces sont mémorisées par l'unité centrale de traitement UT dans la base de donnée BD du terminal de transcription TT à l'étape E3. Les premières traces sélectionnées suivent l'ordre temporel de leurs enregistrements.
A l'étape E4, l'usager US sélectionne et configure des paramètres de transcription de trace PAT en fonction de caractéristiques des premières traces TR sélectionnées dans le terminal de transcription TT. L'un des paramètres de transcription est par exemple un mode de réalisation, tel que le mode transcription ou le mode annotation. Les paramètres de transcription désignent par exemple un ou plusieurs lexiques de mots LM, une ou plusieurs listes d'événements acoustiques L1 et une ou plusieurs listes de symboles L2 que l'usager a décidé d'associer aux premières traces sélectionnées. Cette association est faite en fonction des caractéristiques des premières traces. Par exemple, pour la conversation enregistrée dans le cadre du service vocal sur les restaurants, les lexiques de mots auront trait au contexte linguistique de la gastronomie et les symboles utilisés aux régions dans lesquelles se trouvent les restaurants. Un paramètre de transcription peut concerner encore l'activation ou non du module de complétion MC, le choix d'une langue de transcription, un émetteur spécifique de trace, ou l'existence d'un fichier audio associé à une première trace. Certains paramètres tels que la désignation de l'émetteur ou d'un fichier audio constituent un filtrage ou une sélection parmi les premières traces sélectionnées ; par exemple, l'usager ne requiert que la transcription de premières traces possédant un fichier audio ou associées à un émetteur spécifique.
Dans une variante, des premières traces TR et/ou des paramètres de transcription PAT sont sélectionnées par un administrateur du système de transcription.
L'unité centrale de traitement UT écrit les paramètres de transcription sélectionnés PAT dans la base de données BD du terminal à l'étape E5.

Des étapes de transcription sont répertoriées dans un fichier texte du terminal de transcription TT ou mémorisées dans la base de données BD. La suite du procédé de transcription après l'étape E5 comporte un enchaînement automatique d'au moins deux étapes sélectionnées parmi les étapes de transcription en fonction des paramètres de transcription sélectionnés PAT.

Dans la première réalisation montrée à la figure 1, l'usager US décide de configurer le paramètre de mode de réalisation à "transcription", ce qui signifie qu'il souhaite effectuer des transcriptions de trace. L'usager US paramètre également l'utilisation du module de complétion MC.
La première desdites au moins deux étapes sélectionnées est une détermination d'une première trace courante TRC1 à transcrire parmi les premières traces TR sélectionnées en fonction des paramètres de transcription PAT, par l'unité de traitement UT à l'étape E6. Par exemple, lorsqu'un paramètre de transcription indique un émetteur spécifique, la première trace courante TRC1 doit nécessairement provenir de cet émetteur spécifique; sinon elle est refusée. Lorsque l'usager a déjà transcrit un certain nombre de traces, l'unité de traitement UT considère comme première trace courante suivante la première trace succédant à la première trace qui vient d'être transcrite dans le signal audio à transcrire selon les paramètres de transcription PAT mémorisés à l'étape E5. Sinon, l'usager considère la première trace non transcrite du groupe de traces, comme étant la première trace courante.
Automatiquement à l'étape E7, l'unité de traitement UT commande au module de transcription MT l'ouverture d'une fenêtre de saisie de transcription.
A l'étape E8, le module de visualisation MVI affiche automatiquement les premières traces sélectionnées TR et indique visuellement à l'usager la première trace courante TRC1 par un code couleur ou tout autre signe d'identification de cette trace sur l'écran EC du terminal de transcription TT. Le module de visualisation MVI affiche par exemple des paramètres associés à la première trace courante TRC1 comme l'identificateur de trace, la désignation de l'émetteur, le nom de trace, et la première trace courante TRC1 elle-même sous forme textuelle lorsque la trace TRC1 n'est pas une trace audio.
A l'étape E9, l'unité de traitement UT charge les divers lexiques de mots LM et listes d'évènements acoustiques L1 et de symboles L2 sélectionnés par l'usager US dans une ou plusieurs fenêtres.

A l'étape E10, l'unité de traitement UT exécute automatiquement le fichier audio associé à la première trace courante TRC1 afin que le haut-parleur HP le reproduise et l'usager US l'écoute.
A l'étape E11 en fonction du fichier audio écouté, l'usager US transcrit la première trace courante TRC1 en la deuxième trace courante qu'il saisit au clavier CL dans la fenêtre de saisie lorsque la trace TRC1 est une trace audio. Si la première trace courante TRC1 est une trace transcrite résultant d'une ou plusieurs transcriptions précédentes selon l'invention ou résultant d'une reconnaissance vocale antérieure de la trace courante, qu'elle soit annotée ou non, l'usager US modifie la première trace courante TRC1 au moyen du clavier CL dans la fenêtre de saisie en fonction du fichier audio écouté. L'usager peut utiliser les lexiques de mots et les listes sélectionnés afin de faciliter la transcription. Par exemple en sélectionnant l'événement [rire] dans une liste d'événements acoustiques L1, l'unité de traitement UC insère automatiquement dans la fenêtre de saisie au moins une balise de début [rire].
Pour la transcription, l'unité de traitement UT active le module de complétion MC lorsque le paramètre de transcription renseignant sur l'activation de ce module a été sélectionné.
Le module de complétion MC est relatif à une aide facilitant la saisie par l'usager afin d'améliorer la qualité et la vitesse de saisie. Lors de la saisie au clavier CL par l'usager, des choix de mots et/ou d'expressions et/ou d'évènements acoustiques et/ou de symboles sous forme de liste pour compléter la deuxième trace courante TRC2 sont proposés par le module de complétion MC à l'usager dès la saisie d'au moins un caractère de la deuxième trace courante TRC2. Les mots et/ou les expressions et/ou les événements acoustiques et/ou les symboles proposés sont compris dans les lexiques LM et les listes L1 et L2 sélectionnés par l'usager et désignés par les paramètres de transcription PAT à l'étape E4. Par exemple, le module de complétion MC propose des symboles de la liste de symboles en réponse à la saisie du caractère "@", au moins l'événement acoustique [éternuement] en réponse à la saisie des caractères "[é", etc.
En variante complémentaire, un correcteur orthographique CO est également activé par l'unité de traitement UT. Le correcteur orthographique signale à l'usager des mots ou expressions mal orthographiés par un soulignement. Le correcteur orthographique peut contenir d'autres fonctionnalités telles qu'une détection de faute grammaticale.

Puis le module de validation MVA valide la transcription de la première trace courante TRC1 en la deuxième trace courante TRC2 par l'usager US en appliquant des règles de transcription à l'étape E12. Les règles de transcription sont par exemple des correspondances entre les mots de la deuxième trace courante et les mots dans les lexiques sélectionnés LM et les événements et symboles dans les listes sélectionnées L1 et L2. Ces règles peuvent être également des règles d'écriture : par exemple, un événement acoustique de type long doit être obligatoirement représenté par une balise de début et une balise de fin, telles que les balises [musique] et [-musique]. Lorsque le module de validation refuse la saisie de la deuxième trace courante TRC2, l'usager est automatiquement invité à modifier sa saisie par un message correspondant affiché.
En variante, lorsque le module de validation MV refuse la saisie par exemple à cause d'un élément tel qu'un mot, une expression, un événement acoustique ou un symbole inclus dans la deuxième trace courante TRC2 et non répertorié dans les lexiques et listes, le module de validation MV invite l'usager à ignorer ou à ajouter cet élément nouveau dans le lexique LM ou la liste correspondante L1, L2, ou éventuellement à créer un nouveau lexique ou une nouvelle liste lorsqu'aucun lexique ni aucune liste ne correspond à la signification de l'élément non répertorié.
Dans une autre variante, l'usager force manuellement le module de validation à valider l'élément non répertorié.
Dans le cas contraire, automatiquement à l'étape E13, à la suite d'une saisie d'un caractère spécifique ou d'un caractère d'échappement au clavier par l'usager, l'unité de traitement UT associe la deuxième trace courante TRC2 validée à des caractéristiques de la première trace courante TRC1 éventuellement modifiées par l'usager, telles que la désignation d'émetteur de trace et le fichier audio de trace et une annotation de trace, et commande la mémorisation de la trace TRC2 avec les caractéristiques dans la base de données BD.
En reprenant l'exemple de la conversation décrite plus haut, la deuxième trace courante saisie par l'usager US pour transcrire la première trace courante telle que "asiatique" correspondant au résultat du traitement d'une réponse vocale de l'usager au service vocal par un système de reconnaissance vocale peut être "hum [éternuement] asiatique".
Suite à la mémorisation de la deuxième trace courante TRC2, l'unité de traitement UT détermine automatiquement la première trace courante suivante à transcrire et les étapes E6 à E13 sont itérées.
Selon d'autres variantes, l'ordonnancement des étapes E7 à E13 peut être différent de celui décrit ci-dessus et montré à la figure 2.
Dans une variante, suite à une session antérieure pour l'usager US et une identification de l'usager US à l'étape E1 au début d'une autre session, l'unité de traitement UT charge en mémoire automatiquement les paramètres de transcription de la dernière session antérieure de l'usager. Ce chargement permet à l'unité de traitement UT de passer automatiquement de l'étape E1 à l'étape E6 pour débuter une transcription proprement dite.
Dans une variante de la première réalisation, le mode de réalisation sélectionné par l'usager US est une "modification de transcription" à l'étape E4. L'unité de traitement UT itère les mêmes étapes qu'à la première réalisation à l'exception de l'étape E4 où la sélection du mode est différente, de l'étape E6 où l'unité de traitement UT recherche la trace transcrite en tant que première trace courante susceptible d'être corrigée, et de l'étape E11 où le module de visualisation MVI charge dans la fenêtre de saisie la trace transcrite antérieurement afin d'être modifiée par l'usager.

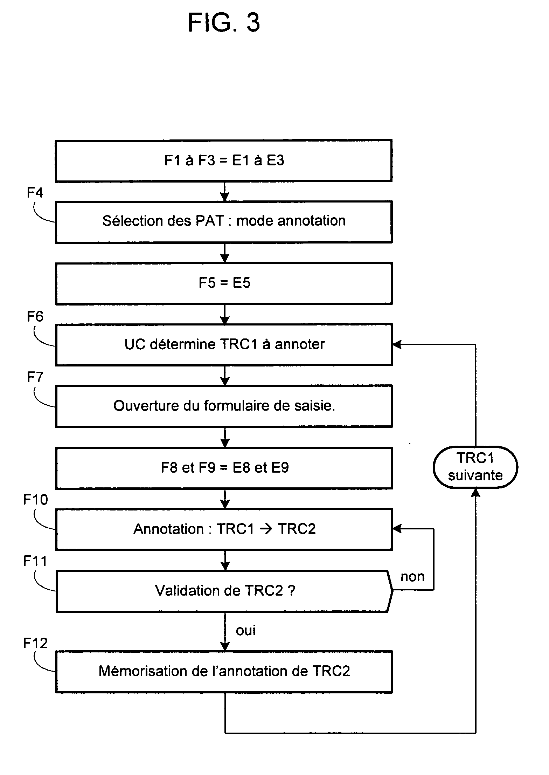

Le procédé de transcription selon la deuxième réalisation comprend principalement des étapes F1 à F12 montrées à la figure 3. Cette deuxième réalisation concerne le paramétrage du mode de réalisation à "annotation". Les étapes E1 à E3 de la première réalisation sont donc identiques aux étapes F1 à F3 de la deuxième réalisation.
A l'étape F4, parmi des paramètres de transcription à sélectionner et configurer, l'usager US sélectionne le mode "annotation" pour la deuxième réalisation. L'étape de mémorisation F5 est identique à l'étape E5. Dans la deuxième réalisation, l'unité de traitement UT ne sélectionne que les premières traces susceptibles d'annotation, puis détermine automatiquement une première trace courante TRC1 à annoter à l'étape F6. Une trace TRC1 susceptible d'être annotée est par exemple une trace provenant d'une voix humaine.
Une annotation à associer à la première trace courante TRC1 est un commentaire, une remarque, ou une indication basé sur une appréciation de la première trace courante TRC1 par l'usager US très difficile à modéliser automatiquement pour être exploitable par un ordinateur.
A l'étape F7, l'unité de traitement UT commande automatiquement au module d'annotation MA l'ouverture d'un formulaire de saisie d'annotation et non plus une fenêtre de saisie de transcription. Ce formulaire présente par exemple des choix multiples sous la forme de cases à cocher ainsi que des champs libres. Les cases à cocher sont en regard de caractéristiques d'annotation prédéterminées mémorisées dans la base de données BD, telles que "ton calme", "ton énervé", "élocution correcte", "question à choix multiple", etc. Les étapes suivantes de visualisation F8 et de chargement F9 sont identiques aux étapes E8 et E9. L'étape E10 est supprimée dans la deuxième réalisation.
A l'étape F10, l'usager transcrit la première trace courante TRC1 en la deuxième trace courante TRC2 en saisissant ou corrigeant l'annotation de la trace courante TRC1 dans le champ libre et/ou en qualifiant l'annotation de la trace courante à l'aide des cases à cocher.
Puis le module de validation MVA valide l'annotation de la première trace courante en la deuxième trace courante par l'usager US en vérifiant des règles d'annotation à l'étape F11. Les règles d'annotation sont par exemple des correspondances entre les mots de l'annotation saisie et des mots dans les lexiques LM sélectionnés à l'étape F4. Lorsque le module de validation refuse la saisie de l'annotation pour constituer la deuxième trace courante TRC2, qui est identique à la première trace courante à l'exception de l'annotation, l'usager est automatiquement invité à modifier sa saisie par un message correspondant affiché.
Si l'annotation saisie est validée, l'unité de traitement mémorise dans la base de données BD l'annotation validée associée à la deuxième trace courante TRC2, à l'étape F12.
En reprenant l'exemple de la conversation décrite plus haut, l'annotation saisie par l'usager US et associée à la deuxième trace courante en laquelle a été transcrite une trace déjà transcrite telle que "hum [éternuement] asiatique", en tant que première trace courante, correspondant au résultat du traitement d'une réponse de l'usager US au service vocal par un système de reconnaissance vocale peut être "comportement calme ; élocution correcte".
Suite à la mémorisation de la deuxième trace courante TRC2 à l'étape F12, l'unité de traitement UT charge automatiquement en mémoire la première trace courante suivante à annoter et les étapes F6 à F12 sont itérées.
Selon d'autres variantes, l'ordonnancement des étapes F7 à F12 peut être différent de celui décrit ci-dessus et montré à la figure 3.

De la même manière que pour la première réalisation, dans une variante de la deuxième réalisation, le mode de réalisation sélectionné par l'usager US est une "modification d'annotation" à l'étape F4, et l'unité de traitement UT itère les mêmes étapes qu'à la deuxième réalisation à l'exception des étapes F4, F6 et F10.

Bien que des transcriptions d'une première trace courante TRC1 en une deuxième trace courante TRC2 relatives à une transcription proprement dite, y compris une correction de la première trace courante, et à une annotation, y compris une correction de l'annotation, aient été décrites et illustrées séparément aux figures 2 et 3, l'usager peut sélectionner un autre mode au cours d'une transcription, quel que soit le mode de la transcription en cours. En d'autres termes, les algorithmes des figures 2 et 3 sont combinés.

En outre, l'usager peut demander l'exécution d'une tâche qui n'est pas comprise dans le mode sélectionné, comme par exemple "ajouter un mot à un lexique".

L'invention décrite ici concerne un procédé et un système pour transcrire semi-automatiquement des traces. Selon une implémentation préférée, les étapes du procédé de l'invention sont déterminées par les instructions d'un programme d'ordinateur incorporé dans un dispositif informatique tel que le terminal de transcription TT. Le programme comporte des instructions de programme qui, lorsque ledit programme est chargé et exécuté dans le terminal de transcription, dont le fonctionnement est alors commandé par l'exécution du programme, réalisent les étapes du procédé selon l'invention.
En conséquence, l'invention s'applique également à un programme d'ordinateur, notamment un programme d'ordinateur sur ou dans un support d'informations, adapté à mettre en oeuvre l'invention. Ce programme peut utiliser n'importe quel langage de programmation, et être sous la forme de code source, code objet, ou de code intermédiaire entre code source et code objet tel que dans une forme partiellement compilée, ou dans n'importe quelle autre forme souhaitable pour implémenter le procédé selon l'invention.
Le support d'informations peut être n'importe quelle entité ou dispositif capable de stocker le programme. Par exemple, le support peut comporter un moyen de stockage ou support d'enregistrement, tel qu'une ROM, par exemple un CD ROM ou une ROM de circuit microélectronique, ou encore un moyen d'enregistrement magnétique, par exemple une disquette (floppy disc) ou un disque dur.
D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type internet.
Alternativement, le support d'informations peut être un circuit intégré dans lequel le programme est incorporé, le circuit étant adapté pour exécuter ou pour être utilisé dans l'exécution du procédé selon l'invention.

## Revendications

1. Procédé pour transcrire des premières traces successives (TR) incluses dans une base de données (BDT) d'un serveur (SB) en des deuxièmes traces dans un terminal (TT) incluant une base de données (BD), comprenant une sélection (E3) de premières traces dans la base de données (BDT) du serveur depuis le terminal et des étapes de transcription de premières traces (E5 à E13), **caractérisé en ce qu'**il comprend:
une sélection (E4) de paramètres de transcription (PAT) en fonction de caractéristiques des premières traces sélectionnées dans le terminal (TT), et
un enchaînement automatique d'au moins deux étapes (E6 ; E5 à E13) sélectionnées parmi les étapes de transcription en fonction des paramètres de transcription sélectionnés.

2. Procédé conforme à la revendication 1, **caractérisé en ce que** la première desdites au moins deux étapes sélectionnées est une détermination (E6) d'une première trace courante (TRC1) à transcrire parmi les premières traces (TR) sélectionnées en fonction des paramètres de transcription (PAT).

3. Procédé conforme à la revendication 2, **caractérisé en ce que** les étapes sélectionnées autres que la première étape sélectionnée (E6) sont une mémorisation (E5) des paramètres de transcription sélectionnés dans la base de données (BD) du terminal, une transcription (E11) de la première trace courante (TRC1) en une deuxième trace courante (TRC2), et une mémorisation (E13) de la deuxième trace courante.

4. Procédé conforme à la revendication 2 ou 3, **caractérisé en ce que** l'une des étapes sélectionnées autres que la première étape sélectionnée (E6) est une exécution automatique (E10) d'un fichier audio associé à la première trace courante (TRC1).

5. Procédé conforme à l'une quelconque des revendications 1 à 4, **caractérisé en ce que** l'une des étapes sélectionnées est un chargement (E9) de lexique de mots (LM) et/ou de liste d'évènements acoustiques (L1) et/ou de liste de symboles (L2) incluses dans la base de données (BD) dans le terminal (TT) en fonction des paramètres de transcription (PAT).

6. Procédé conforme à l'une quelconque des revendications 1 à 5, **caractérisé en ce que** l'une des étapes sélectionnées est une complétion (E11) proposant des choix de mots et/ou d'évènements acoustiques et/ou de symboles inclus dans la base de données (BD) du terminal pour compléter une deuxième trace courante (TRC2) dès une saisie d'un premier caractère de celle-ci.

7. Procédé conforme à l'une quelconque des revendications 1 à 6, **caractérisé en ce que** l'une des étapes sélectionnées est une validation (E12) de la transcription d'une première trace courante (TRC1) en une deuxième trace courante (TRC2) en appliquant des règles de transcription.

8. Procédé conforme à l'une quelconque des revendications 1 à 7, **caractérisé en ce qu'**une première trace (TRC1) résulte d'une reconnaissance vocale d'une trace audio dans le signal audio et est transcrite (E11) en une deuxième trace (TRC2) par modification de la première trace.

9. Procédé conforme à l'une quelconque des revendications 1 à 8, **caractérisé en ce que** la transcription d'une première trace (TRC1) en une deuxième trace (TRC2) consiste en une annotation (F10) à associer à la première trace ou à modifier (F10) une annotation associée à la première trace.

10. Système pour transcrire automatiquement des premières traces successives (TR) incluses dans une base de données (BDT) d'un serveur (SB) en des deuxièmes traces depuis un terminal (TT) incluant une base de données (BD) et un moyen (UT) pour sélectionner (E3) des premières traces dans la base de données (BDT) du serveur et des étapes de transcription de premières traces (E6 ; E5 à E13), **caractérisé en ce que** le terminal (TT) comprend:
un moyen (UT) pour sélectionner (E4) des paramètres de transcription (PAT) en fonction de caractéristiques des premières traces sélectionnées, et
un moyen (UT) pour enchaîner automatiquement au moins deux étapes (E6 ; E5 à E13) sélectionnées parmi les étapes de transcription en fonction des paramètres de transcription sélectionnés.

11. Système conforme à la revendication 10, **caractérisé en ce que** le terminal comprend un moyen (UT) pour déterminer (E6) une première trace courante (TRC1) à transcrire parmi les premières traces (TR) sélectionnées en fonction des paramètres de transcription (PAT) au cours de la première desdites au moins deux étapes sélectionnées.

12. Système conforme à la revendication 10 ou 11, **caractérisé en ce que** le terminal comprend un moyen (UT) pour mémoriser (E5) des paramètres de transcription sélectionnés dans la base de données (BD) du terminal, un moyen (MT) pour transcrire (E11) la première trace courante (TRC1) en une deuxième trace courante (TRC2), et un moyen (UT) pour mémoriser (E13) la deuxième trace courante (TRC2).

13. Système conforme à l'une quelconque des revendications 10 à 12, **caractérisé en ce qu'**il comprend un moyen (UT) pour exécuter automatiquement un fichier audio associé à la première trace courante (TRC1).

14. Terminal pour transcrire automatiquement des premières traces successives (TR) incluses dans une base de données (BDT) d'un serveur (SB) en des deuxièmes traces comprenant une base de données (BD) et un moyen (UT) pour sélectionner (E3) des premières traces dans la base de données (BDT) du serveur et des étapes de transcription de premières traces (E6 ; E5 à E13), **caractérisé en ce que** le terminal (TT) comprend:
un moyen (UT) pour sélectionner (E4) des paramètres de transcription (PAT) en fonction de caractéristiques des premières traces sélectionnées, et
un moyen (UT) pour enchaîner automatiquement au moins deux étapes (E6 ; E5 à E13) sélectionnées parmi les étapes de transcription en fonction des paramètres de transcription sélectionnés.

15. Programme d'ordinateur sur un support d'informations pour transcrire des premières traces successives (TR) incluses dans une base de données (BDT) d'un serveur (SB) en des deuxièmes traces et apte à être mis en oeuvre dans un terminal de transcription (TT), ledit terminal comprenant des instructions de programme qui, lorsque le programme est chargé et exécuté sur ledit terminal, réalisent les étapes suivantes de :
sélectionner (E4) des paramètres de transcription (PAT) en fonction de caractéristiques des premières traces sélectionnées dans le terminal (TT), et
d'enchaîner automatiquement au moins deux étapes (E6 ; E5 à E13) sélectionnées parmi les étapes de transcription en fonction des paramètres de transcription sélectionnés.
